(19) Europäisches Patentamt
European Patent Office
Office européen des brevets

(11) Veröffentlichungsnummer: **0 000 531**
**B1**

(12) # EUROPÄISCHE PATENTSCHRIFT

(21) Anmeldenummer: **78100416.3**

(22) Anmeldetag: **18.07.78**

(51) Int. Cl.³: **C 07 F 9/40, //**
D 06 M 13/44

(54) **Verfahren zur Herstellung von Dialkoxyphosphonoalkylcarbamaten**

(30) Priorität: **30.07.77 DE 2734454**

(43) Veröffentlichungstag der Anmeldung:
**07.02.79 Patentblatt 79/03**

(45) Bekanntmachung des Hinweises auf die Patenterteilung:
**23.07.80 Patentblatt 80/15**

(84) Benannte Vertragsstaaten:
**BE CH DE FR GB NL**

(56) Entgegenhaltungen:
**FR - A - 2 220 537**
**FR - A - 2 229 705**
**FR - A - 2 258 390**
**Journal of Organic Chemistry, 1960**
**25, Seiten 665—666**

(73) Patentinhaber: **Hoechst Aktiengesellschaft**
**Postfach 80 03 20**
**D - 6230 Frankfurt**
**Main 80 (DE)**

(72) Erfinder: **Kleiner, Hans-Jerg, Dr.**
**Altkönigstrasse 11a**
**D - 6242 Kronberg**
**Taunus (DE)**

**EP 0 000 531 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung von Dialkoxyphosphonoalkylcarbamaten

Dialkoxyphosphonoalkylcarbamate besitzen Bedeutung als Flammschutzmittel für Textilgut, insbesondere von solchem auf Basis natürlicher oder regenerierter Cellulose. Ein technisch interessantes Verfahren zur Herstelung dieser phosphorhaltigen Produkte besteht in der Umsetzung von Dialkylphosphiten mit Alkenylcarbamaten in Gegenwart von Peroxiden als Katalysatoren (DT-OSen 20 24 280 und 23 12 090). Bei diesem Verfahren sollen zur Vermeidung von Nebenreaktionen und zur Verbesserung der Ausbeute die Dialkylphosphite im Überschuss, und zwar in der 2—4fachen (DT-OS 20 24 280) bzw. 1,5—5fachen (DT-OS 23 12 090) molaren Menge — bezogen auf das jeweils nur 1 olefinisch ungesättigte Gruppe enthaltende Alkenylcarbamat — eingesetzt werden. Demgemäss werden in den Ausführungsbeispielen der DT-OSen die peroxidischen Katalysatoren in Mengen von ca. 10—20 Gew.-%, bezogen auf das Carbamat, verwendet.

Dieses Verfahren hat Jedoch verschiedene Nachteile, insbesondere muss der Überschuss an Dialkylphosphit abdestil-liert werden. Das so zurückgewonnene Phosphit ist aber durch zahlreiche Nebenprodukte verunreinigt, die — wenn überhaupt — nur schwer abtrennbar sind, sodass deswegen die Rentabilität des Verfahrens und damit das Verfahren selbst verbesserungsbedürftig erschien.

Entgegen dem Vorurteil obiger DT-OS, man müsse für die beschriebene Umsetzung das Dialkylphosphit in Überschuss einsetzen, um Nebenreaktionen zu vermeiden, wurde nun gefunden, dass bei einem Molverhältnis von Dialkylphosphit : olefinisch ungesättigte Gruppen in dem Carbamat von 1 : 1 nicht nur Verfahrensprodukte gleicher Qualität und gleicher Ausbeute enhalten werden, wie bei dem bisher bekannten Verfahren, sondern dass diese weniger unerwünschte saure Anteile enthalten, sodass die Säurezahl der Produkte deútlich niedriger liegt. Diese Säurezahl ist für die weitere Veratbeitung — insbesondere die Methylolisierung — von Bedeutung. Während nach der eingangs erwähnten Dt-OS 20 24 280 — siehe deren Beispiele! — dieser Weiterverarbeitung eine Reinigung an einer Aluminiumoxyd-Säure vorgeschaltet werden muss, lassen sich die nach dem erfindungsgemässen Verfahren enthaltenen Produkte direkt weiterverarbeiten.

Gegenstand der Erfindung ist somit ein Verfahren zur Herstellung von Dialkoxyphosphonoalkylcarbamaten der Formel

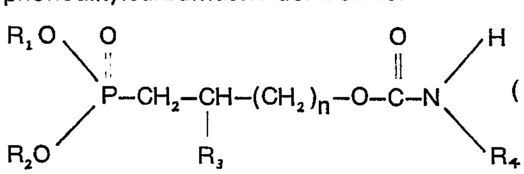
(I),

in der $R_1$ und $R_2$ = gleiche oder verschiedene Alkylreste mit 1—4 C-Atomen,

$R_3$ = H oder die $CH_3$-Gruppe,

$R_4$ = H, ($C_1$—$C_4$)-Alkyl oder die Gruppe

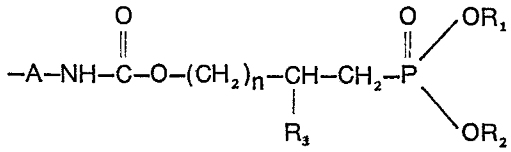
(II),

worin A = ($C_2$—$C_4$)-Alkylengruppe,

n = 1 oder 2,

durch Umsetzung von Dialkylphosphiten der Formel

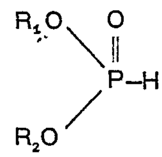
(III),

in der $R_1$ und $R_2$ die gleiche Bedeutung wie in Formel (I) haben, mit Alkenylcarbamaten der Formel

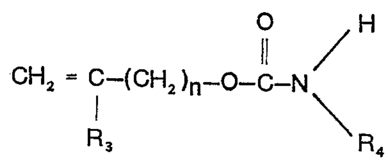
(IV),

in der $R_3$ und n die gleiche Bedeutung wie in Formel (I) haben, und

$R_4'$ = H, ($C_1$—$C_4$)-Alkyl oder die Gruppe

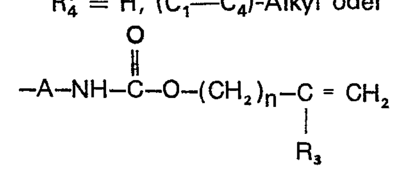
(V)

worin A, n, und $R_3$ die bei den Formeln (I) und (II) angegebenen Bedeutungen haben,

bei erhöhter Temperatur und in Gegenwart von Peroxiden als Katalysatoren, das dadurch gekennzeichnet ist, dass man die Dialkylphosphite (III) und die Alkenylcarbamate (IV) — wenn in diesen $R_4'$ = H oder eine ($C_1$—$C_4$)-Alkylgruppe — im Molverhältnis 1 : 1 bzw. — wenn in den Alkenylcarbamaten (IV) $R_4'$ = die Gruppe (V) — im Molverhältnis 2 : 1 einsetzt.

Wenn in den Alkenylcarbamaten (IV) $R_4'$ = die Gruppe (V), besitzen diese im Molekül 2 olefinisch ungesättigte Gruppen, sodass in diesem Fall das Molverhältnis Dialkylphosphit : Alkylencarbamat 2 : 1 begrundet ist. Es muss als durchaus überraschend angesehen werden, dass bei dem erfindungsgemässen Verfahren die Umsetzung von 1 Mol Dialkylphosphit mit. 1 Mol olefinisch ungesättigte Gruppen im Alkenylcarbamat durchgeführt werden kann und dabei entgegen den in den DT-OSen 20 24 280 und 23 12 090 geschilderten Nachteilen die Reaktionsprodukte in guten Ausbeuten und befriedigender Reinheit anfallen.

Als Dialkylphosphite der Formel (III) kommen für das erfindungsgemasse Verfahren z.B.

Dimethylphosphit, Methyläthylphosphit, Diäthylphosphit, Dipropylphosphit und Dibutylphosphit etc. zum Einsatz; bevorzugt sind Dimethyl und Diathylphosphit.

Als alkenylcarbamate (IV) kommen z.B. in Frage: Allylcarbamat, Methallylcarbamat, 2 - Methylbuten - (1) - yl - carbamat, Buten - (1) - yl - carbamat, N,N' - Äthylen - bis - (allylcarbamat). Bevorzugt sind Allyl- und Methallylcarbamat, insbesondere Allylcarbamat.

Die Reaktions-Temperaturen werden zweckmässig im Intervall von ca. 120° bis 170° C, vorzugsweise ca. 130° bis 150° C, gewählt.

Als Peroxid-Katalysatoren kommen z.B. in Frage: Di - tert. - butylperoxid, tert. - Butyl - peroxybenzoat, 2,5 - Dimethylbis - 2,5 - (peroxybenzoat), Benzoylperoxid. Überraschenderweise zeigt tert. - Butylperoxybenzoat eine bevorzugte und besonders ausgeprägte katalytische Wirksamkeit. Die Katalysatoren werden Zweckmässig in einer Menge von ca. 1 bis 5 Gew.%, vorzugsweise ca. 2 bis 4 Gew.-%, bezogen auf das Gewicht des eingesetzten Alkenylcarbamats, verwendet.

Inerte Lösungsmittel können verwendet werden. Als solche finden z.B. Verwendung Alkohole und Äther. Auch das Endprodukt kann als Lösungsmittel verwendet werden. Im allgemeinen wird jedoch in Abwesenheit von Lösungsmitteln gearbeitet.

Es ist zweckmässig, unter Inertgasschutz zu arbeiten. Als solche Inertgase sind vor allem Stickstoff, Argon, Kohlendioxid geeignet.

Das Verfahren wird Zweckmässig und besonders bevorzugt derart durchgeführt, dass das Dialkylphosphit unter Inertgasatmosphäre auf die erforderliche Reaktionstemperatur erhitzt und dann das Alkenylcarbamat, vermischt mit dem Peroxid, zudosiert wird. Die Umsetzung ist nach 2 bis 6 Std. beendet. Der Umsatz beträgt dann imm allgemeinen über 90 % d. Th. Die Ausgangsstoffe können in an sich üblicher Weise auch in anderer Reihenfolge zur Umsetzung gebracht werden. Nicht zu empfehlen ist jedoch das gemeinsame Aufheizen der vorgemischten Komponenten, da dies nicht nur bei technischen Ansätzen zu Zersetzungen führen kann.

Das Verfahren kann sowohl diskontinuierlich als auch kontinuierlich durchgeführt werden. Zur Reinigung der erhaltenen Reaktionsprodukte werden gegebenenfalls verwendete lösungsmittel abdestilliert. Weiterhin können bis zu einer Innentemperatur von ca. 120—150° C und bei einem Druck von ca. 0,1 bis 5 Torr nicht umgesetzte Anteile an den Ausgangsstoffen abdestilliert werden. Häufig ist jedoch selbst diese einfache Massnahme für die Weiterverarbeitung nicht erforderlich. Die Produkte des erfindungsgemässen Verfahrens sind dann in ihrer Reinheit dan nach dem Verfahren der DT-OSen 20 24 280 und 23 12 090 heregestellten Produkten bei sonst gleichen Eigenschaften dadurch überlegen, dass sie darüber hinaus deutlich weniger saure Anteile (Säurezahl = mg zur Neutralisation von 1 g Substanz notige KOH : ca. 10—15, gegenüber ca. 30—40 der Produkte nach den genannten DT-OSen) enthalten, was für den Einsatz in der Praxis sehr erwünscht ist. Sie können ohne weitere Reinigungsmassnahmen zur Herstellung von Mitteln zur Flammhemmung verwendet werden.

Die folgenden Beispiele sollen die Erfindung näher erläutern, ohne sie jedoch zu begrenzen.

Beispiel 1

220 g Dimethylphosphit werden unter Stickstoffatmosphaře und bei lebhaften Rühren auf 140—145° C erhitzt. Dann wird ein Gemisch von 202 g Allylcarbamat und 6 g tert.-Butylperoxybenzoat innerhalb von 5 Std. eingetropft. Es wird 1 Std. bie 140—145° C nachgerührt. Anschliessend wird bei 1—2 Torr bis zu einer Innentemperatur von 140° C andestilliert. Dabei destillieren 11 g ab. Es verbleiben ca. 400 g 3 - Dimethoxyphosphonopropylcarbamat. Das entspricht einer Ausbeute von ca. 95 % d. Th.

Beispiel 2

220 g Dimethylphosphit werden unter Stickstoffatmosphäre und bei lebhaftem Rühren auf 150—155° C erhitzt. Dann wird ein Gemisch von 202 g Allylcarbamat und 6 g tert.-Butylperoxybenzoat innerhalb von 2,5 Std. eingetropft. Es wird 1 Std. bei 150° C nachgerührt. Anschliessend wird bei 0,8 bis 1,5 Torr bis zu einer Innentemperatur von 140° C andestilliert. Dabei destillieren 5 g ab. Es verbleiben 410 g 3 - Dimethoxyphosphonopropylcarbamat. Das entspricht einer Ausbeute von über 95 % d. Th.

Beispiel 3

82 g Dimethylphosphit werden unter Stickstoffatmosphäre und bei lebhaftem Rühren auf 140° C erhitzt. Dann wird zunächst während ca. 1.3 Std. ein Gemisch von 60 g Methallylcarbamat und 2,0 g tert.-Butylperoxybenzoat, anschliessend während 40 Min. ein Gemisch von 26 g Methallylcarbamat und 2,0 g tert.-Butylperoxybenzoat eingetropft. Es wird 1 Std. bei 135° C nachgerührt. Dann wird bei 0,5—1 Torr andestilliert bis zu einer Innentemperatur von 115° C. Es destillieren 7.5 g ab. Es verbleiben 164 g 3 - Dimethoxyphosphono - 2 - methylpropylcarbamat. Das entspricht einer Ausbeute von ca. 95 % d. Th.

Beispiel 4

80g Dimethylphosphit werden unter Stickstoffatmosphäre und bei lebheften Rühren auf 150° C erhitzt. Dann wird ein Gemisch von 94 g 2 - Methylbuten - (1) - yl - carbamat und 4 g Di - tert. - butylperoxid während 2 Std. zugetropft. Anschliessend wird 1 Std. bei 145° C nachgerührt. Dann wird bei 1 Torr bis zu einer Innentemperatur von 140° C andestilliert. Es destillieren 4 g ab. Man erhält 173 g 4 - Dimethyoxyphosphono - 2 - methylbutylcarbamat. Das entspricht einer Ausbeute von über 95 % d. Th.

Beispiel 5

99 g Diäthylphosphit werden unter Stickstoffatmosphäre und bei lebhalftem Rühren auf 150° C erhitzt. Dann wird ein Gemisch von 94 g 2 - Methylbuten - (1) ylcarbamat und 3,8 g Di - tert. - butylperoxid während 2 Std. Zugetropft. Anschliessend wird 1 Std. bei 145° C nachgerührt. Dann wird bei 0,6 Torr bis zu einer Innentemperatur von 136° C andestilliert. Es destillieren 3 g ab. Man erhält 192 g 4 - Diäthoxyphosphono - 2 - methylbutylcarbamat. Das entspricht einer Ausbeute von über 95 % d. Th.

Beispiel 6

40 g Dimethylphosphit werden unter Stickstoffatmosphäre und unter lebhaftem Rühren auf 140° C erhitzt. Dann wird ein Gemisch von 45 g Dimethylphosphit, 88 g N,N' - Äthylenbis - (allylcarbamat) und 4 g tert. - Butylperoxybenzoat, das auf 50° C gehalten wird, während 2 Std. eingetropft. Dann wird bei 0,5 Torr bis zu einer Innentemperatur von 145° C andestilliert. Es destillieren 5 g ab. Man erhält 172 g N,N' - Äthylen - bis - (3 - dimethoxyphosphonopropylcarbamat). Das entspricht einer Ausbeute von ca. 95 % d. Th.

**Patentansprüche**

1. Verfahren zur Herstellung von Dialkoxyphosphonoalkylcarbamaten der Formel

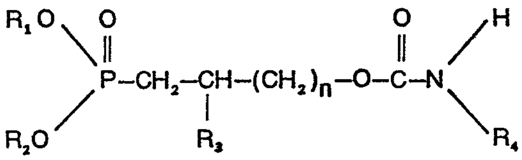 (I),

in der $R_1$ und $R_2$ = gleiche oder verschiedene Alkylreste mit 1—4 C-Atomen,
$R_3$ = H oder die $CH_3$-Gruppe,
$R_4$ = H, ($C_1$—$C_4$)-Alkyl oder die Gruppe

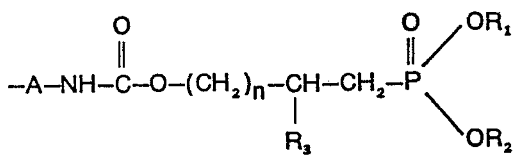 (II),

worin A = ($C_2$—$C_4$)-Alkylengruppe,
n = 1 oder 2,
Durch Umsetzung von Dialkylphosphiten der Formel

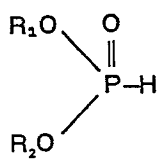 (III),

in der $R_1$ und $R_2$ die gleiche Bedeutung wie in Formel (I) haben, mit Alkenylcarbamaten der Formel

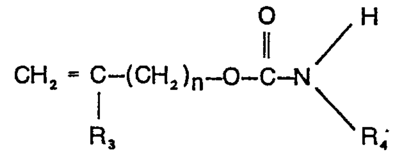 (IV),

in der $R_3$ und n die gleiche Bedeutung wie in Formel (I) haben, und
$R_4'$ = H, ($C_1$—$C_4$)-Alkyl oder die Gruppe

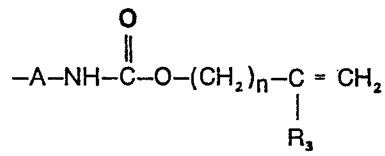 (V)

worin A, n und $R_3$ die bei den Formeln (I) und (II) angegebenen Bedeutungen haben,
bei erhöhter Temperatur und in Gegenwart von Peroxiden als Katalysatoren, dadurch gekennzeichnet, dass man die Dialkyl - phosphite (III) und die Alkylcarbamate (IV) — wenn in Diesen $R_4'$ = H oder eine ($C_1$—$C_4$)-Alkylgruppe — im Molverhältnis 1 : 1 bzw. — wenn in den Alkenylcarbamaten (IV) $R_4'$ = die Gruppe (V) — im Molverhältnis 2 : 1 einsetzt.

2. Verfahren nach Anspruch 1, dadurch gekennzeichnet, dass man als Dialkylphosphite der Formel (III) Dimethyloder Diäthylphosphit verwendet.

3. Verfahren nach Ansprüchen 1 bis 2, dadurch gekennzeichnet, daß man als Alkenylcarbamate der Formel (IV) Allyl oder Methallylcarbamate verwendet.

4. Verfahren nach Ansprüchen 1 bis 3, dadurch gekennzeichnet, daß man als Alkenylcarbamat der Formel (IV) Allylcarbamat verwendet.

5. Verfahren nach Ansprüchen 1 bis 4, dadurch gekennzeichnet, daß man die Umsetzung bei einer Temperatur von ca. 120 bis 170°C durchführt.

6. Verfahren nach Ansprüchen 1 bis 5, dadurch gekennzeichnet, daß man die Umsetzung bei einer Temperatur von ca. 130 bis 150°C durchführt.

7. Verfahren nach Ansprüchen 1 bis 6, dadurch gekennzeichnet, daß man als Peroxykatalysator tert.-Butylperoxybenzoat verwendet.

8. Verfahren nach Ansprüchen 1 bis 7, dadurch gekennzeichnet, daß man den Peroxidkatalysator in einer Menge von ca. 1 bis 5 Gewichtsprozent, bezogen auf das eingesetzte Alkenylcarbamat (iv) verwendet.

9. Verfahren nach Ansprüchen 1 bis 8, dadurch gekennzeichnet, daß man den Peroxidkatalysator in einer Menge von ca. 2 bis 4 Gewichtsprozent, bezogen auf das eingesetzte Alkenylcarbamat (IV) verwendet.

10. Verfahren nach Ansprüchen 1—9, dadurch gekennzeichnet, dass man das Dialkylphosphit (III) unter Inertgasatmospäre auf Reaktionstemperatur erhitzt und dann das Alkenylcarbamat (IV), vermischt mit dem Peroxid-Katalysator, zudosiert.

## Revendications

1. Procédé de préparation de carbamates de dialcoxyphosphono - alkyles répondant à la formule I

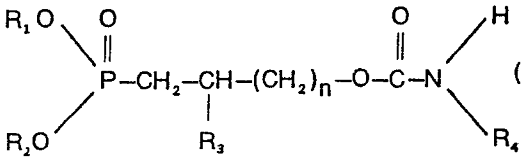
(I),

dans laquelle:

$R_1$ et $R_2$ représentent des radicaux alkyles identiques ou différents et contenant chacun de l à 6 atomes de carbone,

$R_3$ représente H ou —CH®,

$R_4$ représente H, un radical alkyle en $C_1$—$C_4$ ou un groupement II

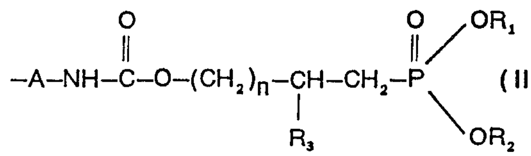
(II),

dans laquelle A désigne un radical alkylène en $C_2$—$C_4$, et

n est égal à l ou à 2, par réaction de phosphites de dialkyles répondant à la formule III:

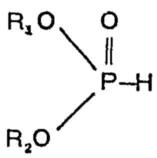
(III),

dans laquelle $R_1$ et $R_2$ ont les mêmes significations que dans la formule I, Avec des carbamates d'alcényles répondant à la formule IV:

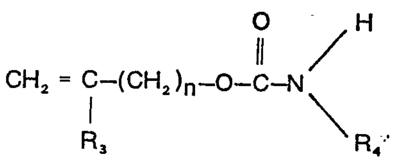
(IV),

dans laquelle $R_3$ et n ont les mêmes significations que dans la formule I et

$R'_4$ représente H, un radical alkyle en $C_1$—$C_4$ ou un groupement V

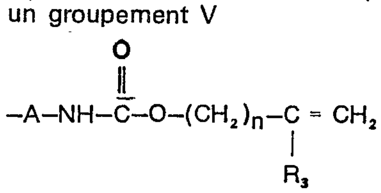
(V)

dans lequel A, n et $R_3$ ont les significations indiquées ci-dessus à propos des formules I et II, à température élevée et en présence de peroxydes jouant le rôle de catalyseurs, procédé caractérisé en ce qu'on met en jeu les phosphites de dialkyles (III) et les carbamates d'alcényles (IV), lorsque, dans ces derniers, $R'_4$ représente H ou un radical alkyle en $C_1$—$C_4$, dans le rapport molaire 1 : 1, ou, lorsque, dans les carbamates d'alcényles (IV), $R'_4$ désigne un groupement (V), dans le rapport molaire 2 : 1.

2. Procédé selon la revendication 1, caractérisé en ce qu'on utilise, comme phosphite de dialkyle de formule III, le phosphite de diméthyle ou le phosphite de diéthyle.

3. Procédé selon l'une des revendications 1 et 2, caractérisé en ce qu'on utilise, comme carbamate d'alcényle de formule IV, le carbamate d'allyle ou le carbamate de méthallyle.

4. Procédé selon l'une quelconque des revendications 1 à 3, caractérisé en ce qu'on utilise, comme carbamate d'alcényle de formule IV, le carbamate d'allyle.

5. Procédé selon l'une quelconque des revendications 1 à 4, caractérisé en ce qu'on effectue la réaction à une température comprise entre 120 et 170°C.

6. Procédé selon l'une quelconque des revendications 1 à 5, caractérisé en ce qu'on effectue la réaction à une température comprise entre 130 et 150°C.

7. Procédé selon l'une quelconque des revendications 1 à 6, caractérisé en ce qu'on utilise, comme catalyseur peroxydique, le peroxybenzoate de tert - butyle.

8. Procédé selon l'une quelconque des revendications 1 à 7, caractérisé en ce qu'on utilise le catalyseur peroxydique en une quantité comprise entre 1 et 5 % en poids par rapport au carbamate d'alcényle (IV) mis en jeu.

9. Procédé selon l'une quelconque des revendications 1 à 8, caractérise en ce qu'on utilise le catalyseur peroxydique en une quantité comprise entre 2 et 4 % en poids par rapport au carbamate d'alcényle (IV) mis en jeu.

10. Procédé selon l'une quelconque des revendications 1 à 6, caractérisé en ce qu'on chauffe le phosphite de dialkyle (III) à la température réactionnelle sous un gaz inerte, puis on introduit progressivement le carbamate d'alcényle (IV) mélangé avec le catalyseur peroxydique.

## Claims

1. Process for the preparation of dialkoxyphosphonoalkylcarbamates of the formula

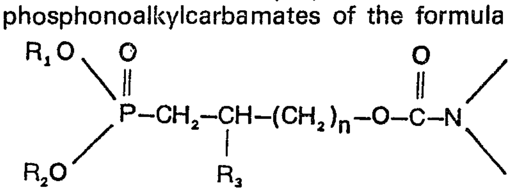
(I),

in which $R_1$ and $R_2$ are identical or different alkyl radicals having from 1 to 4 carbon atoms,

$R_3$ is hydrogen or the $CH_3$ group,

$R_4$ is hydrogen, $(C_{1-4})$ alkyl or the group

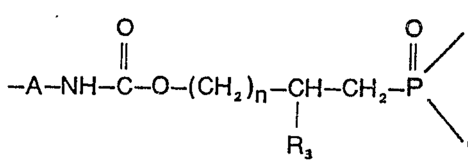
(II),

in which A is ($C_{2-4}$) alkylene,
n is 1 or 2,
by reacting dialkylphosphites of the formula

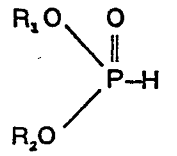

(III),

in which $R_1$ and $R_2$ are defined as in the formula I, with alkenylcarbamates of the formula

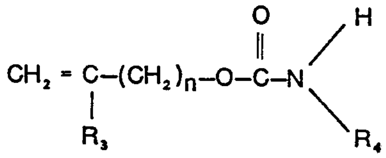

(IV),

in which $R_3$ and n are defined as in the formula I and
$R'_4$ is hydrogen, ($C_{1-4}$)alkyl or the group

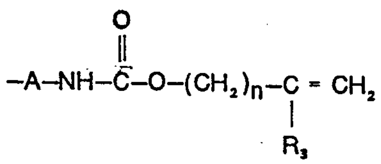

(V)

in which A, n and $R_3$ are defined as in the formulae I and II, at elevated temperature and in the presence of peroxides as catalysts, which comprises using the dialkylphosphites III and the alkenylcarbamates IV, if $R'_4$ is hydrogen or a ($C_{1-4}$)alkyl group, in a molar ratio of 1 : 1 or, if $R'_4$ in the alkenylcarbamates IV is the group V, in a molar ratio of 2:1.

2. Process as claimed in claim 1, which comprises using as dialkylphosphites of the formula III dimethyl- or diethylphosphite.

3. Process as claimed in claims 1—2, which comprises using as alkenylcarbamates of the formula IV allyl- or methallylcarbamates.

4. Process as claimed in claims 1—3, which comprises using as alkenylcarbamate of the formula IV alkylcarbamate.

5. Process as claimed in claims 1—4, which comprises carrying out the reaction at a temperature of from 120 to 170°C.

6. Process as claimed in claims 1—5, which comprises carrying out the reaction at a temperature of from 130 to 150°C.

7. Process as claimed in claims 1—6, which comprises using as peroxide catalyst tertiary butylperoxybenzoate.

8. Process as claimed in claims 1—7, which comprises using the peroxide catalyst in an amount of from 1 to 5 weight percent, calculated on the alkenylcarbamate IV.

9. Process as claimed in claims 1—8, which comprises using the peroxide catalyst in an amount of from 2 to 4 weight percent, calculated on the alkenylcarbamate IV.

10. Process as claimed in claims 1—9, which comprises heating the dialkylphosphite III to the reaction temperature under an inert gas atmosphere and adding thereafter the alkenylcarbamate IV mixed with the peroxide catalyst.